# EUROPÄISCHE PATENTSCHRIFT

(11) **EP 1 283 329 B1**
(45) Veröffentlichungstag und Bekanntmachung des Hinweises auf die Patenterteilung: **05.11.2008**
(21) Anmeldenummer: 02017834.9
(22) Anmeldetag: 08.08.2002
(51) Int. Cl.: F01L 1/02, F02F 7/00

(54) **Brennkraftmaschine mit gekapseltem Zahnriemen für die Nockenwelle**
Internal combustion engine with covered toothed belt for a camshaft
Moteur à combustion interne avec courroie dentée couverte pour un arbre à cames

(30) Priorität: 10.08.2001 DE 10139429
(43) Veröffentlichungstag der Anmeldung: 12.02.2003
(73) Patentinhaber: ADAM OPEL AG, 65423 Rüsselsheim (DE)
(72) Erfinder: Herchenröder, Jürgen, Dipl.-Ing. (FH), 65428 Rüsselsheim (DE); Seeger, Peter, Dipl.-Ing. (FH), 64625 Bensheim (DE)

(56) Entgegenhaltungen:
- EP-A- 0 124 433
- EP-A- 0 989 294
- DE-A- 10 025 658
- US-A- 4 729 348

## Beschreibung

Die Erfindung betrifft eine Brennkraftmaschine mit einem Übertragungsmittel zum Übertragen der Bewegung einer in einem Zylinderblock gelagerten Kurbelwelle auf mindestens eine in einem Zylinderkopf gelagerten Nockenwelle, sowie mit einer Abdeckung für das Übertragungsmittel, die in Art einer Kapsel das Übertragungsmittel umschließt, mit einem hinteren, zwischen dem Übertragungsmittel und dem Zylinderblock sowie dem Zylinderkopf angeordneten Kapselabschnitt und einem vorderen, auf der dem Zylinderblock sowie Zylinderkopf abgewandten Seite des Übertragungsmittels angeordneten Kapselabschnitt.

Eine Brennkraftmaschine mit einem derartig gekapselten Übertragungsmittel ist aus der Praxis und EP 0 124 433 A bekannt. Dort erstreckt sich die hintere, einteilige Übertragungsmittelabdeckung über den Zylinderkopf und den Zylinderblock. Sie hat Öffnungen für Drehzahlsensor, Motorhalter, Wasserpumpe, übertragungsmittelspanner und -umlenkrollen, Nockenwellen sowie Kurbelwellenrad. Der Motorhalter befindet sich innerhalb des Übertragungsmittelteils und durchbricht die vordere Übertragungsmittelabdeckung. Die Fixierung der vorderen Abdeckungsteile erfolgt über eine Kombination aus Verrastung und Verschraubung.

Nachteilig ist dabei diese Art der Kapselung des Übertragungsmittels, dass die hintere Übertragungsmittelabdeckung ein großes Kunststoffteil ist, und deshalb mit großen Toleranzen und Verzug behaftet ist. Aus diesem Grund ist für die Ausrichtung bei der Montage ein Spezialwerkzeug erforderlich. Wegen der vielen Öffnungen ist die Gefahr, dass die Kapselung undicht ist, recht groß. Die erforderliche zusätzliche Dichtung zwischen dem Motorhalter und der vorderen Übertragungsmittelabdeckung stellt eine weitere Leckagestelle dar. Die Verrastung von vorderer und hinterer Übertragungsmittelabdeckung ist nicht immer eindeutig. Hierdurch ist es unter Umständen schwierig, das vordere Abdeckungsteil im Fahrzeug zu demontieren bzw. zu montieren.

Aufgabe der vorliegenden Erfindung ist es, die Kapselung des Übertragungsmittels dahingehend zu optimieren, dass das gekapselte übertragungsmittel und die mit diesem zusammenwirkenden Bauteile der Brennkraftmaschine zwecks Montage und Wartung besonders gut zugänglich sind.

Gelöst wird die Aufgabe bei einer Brennkraftmaschine der eingangs genannten Art dadurch, dass der hintere und der vordere Kapselabschnitt der Abdeckung im Bereich der Trennebene von Zylinderblock und Zylinderkopf geteilt ausgebildet sind.

Erfindungsgemäß ist somit die Kapsel für das Übertragungsmittel, das ein Zahnriemen ist, entsprechend der konstruktiven und funktionellen Trennung der Brennkraftmaschine in den Zylinderblock und den Zylinderkopf in etwa auf dem Niveau dieser Trennebene getrennt. Arbeiten, die im oberem Bereich des Zahnriemens, somit im Bereich des Zylinderkopfes erforderlich sind, können somit ohne weiteres nach dem Entfernen des oberen, vorderen Kapselabschnittes und, sofern erforderlich, auch des oberen, hinteren Kapselabschnittes bewerkstelligt werden. Ist auch der Raum des unteren Abschnittes des Zahnriemens in die Arbeiten einzubeziehen wird zusätzlich der vordere, untere Kapselabschnitt der Abdeckung entfernt.

Ein wesentlicher Bestandteil der Zahnriemenkapselung ist der in den Ansprüchen 2 bis 4 beschriebene Aggregateträger. Eine hohe umlaufende Rippe am Aggregateträger, der die Funktion eines Pumpenmoduls besitzt, bildet Bestandteil des hinteren, unteren Kapselabschnittes.

Zum Zylinderkopf hin wird der Zahnriemen vorzugsweise durch den aus Kunststoff bestehenden, hinteren, oberen Kapselabschnitt gekapselt. Dieser Kapselabschnitt ist vorzugsweise im Wesentlichen flach und der obere, vordere Kapselabschnitt im Wesentlichen haubenförmig ausgebildet.

In den Patentansprüchen 6 und 7 ist eine vorteilhafte Anordnung und Verbindung der Kapselabschnitte beschrieben. Der obere, vordere Kapselabschnitt kann sehr einfach mit dem unteren, vorderen Kapselabschnitt verbunden werden, in dem er von oben in den unteren vorderen Kapselabschnitt einsetzbar, insbesondere einsteckbar ist. Die Gestaltung einer Nut-Feder-Verbindung zwischen benachbarten Kapselabschnitten trägt zur Abdichtung erheblich bei, insbesondere wenn zusätzliche Dichtmittel Verwendung finden, die in die Nut eingesetzt werden. Vorzugsweise sind im Bereich aller Kontaktflächen der Kapselteile Dichtmittel vorgesehen. Es handelt sich hierbei beispielsweise um einen Siliconschaum, der nach der Herstellung automatisch, insbesondere im Nutgrund aufgetragen und bei der Montage der Kapselteile verpresst wird.

Weitere vorteilhafte Ausbildungen der Zahnriemenkapselung betreffen einen integrierten Zahnriemenüberspringschutz am Auslassnockenwellenrad, einen integrierten Halter für einen Kabelbaum, einen einclipsbaren, integriertem Nockenwellensensor sowie Mittel zum Ausrichten der Kapselteile zueinander und bezüglich des Zylinderblocks bzw. des Zylinderkopfes.

Weitere Merkmale der Erfindung sind in den Unteransprüchen, der Beschreibung der Figuren sowie den Figuren selbst dargestellt.

In den Figuren ist die Erfindung anhand eines Ausführungsbeispiels dargestellt, ohne hierauf beschränkt zu sein. Es zeigt:
- Fig. 1: eine Stirnansicht desjenigen Bereiches der Brennkraftmaschine, in dem diese mit den Aggregaten versehen ist,
- Fig. 2: eine räumliche Ansicht der die zahnriemenkapselumbildenden Bauteile, im Wesentlichen von vorne gesehen,
- Fig. 3: ein Detail der Verbindung von oberem, vorderem und unterem, vorderem Kapselabschnitt,
- Fig. 4: eine Ansicht der Brennkraftmaschine gemäß Fig. 1, bei entferntem oberen, vorderen Kapselabschnitt,

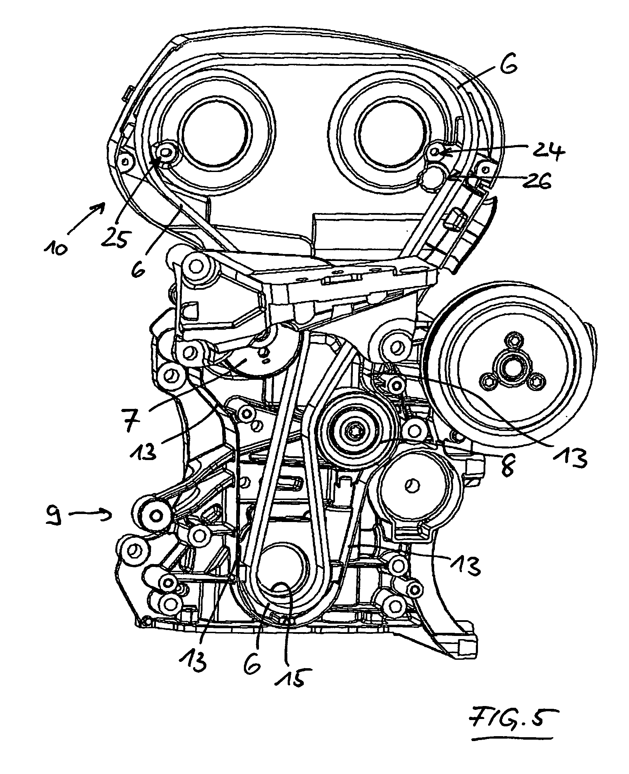

- Fig. 5: die hintere Zahnriemenkapselung,

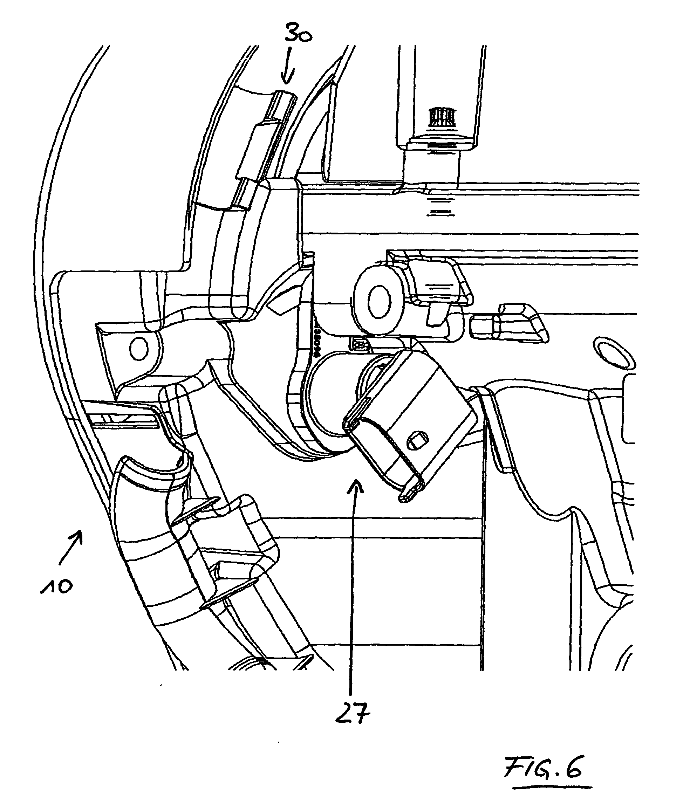

- Fig. 6: ein Detail des oberen, hinteren Kapselabschnittes mit Motorhalter,
- Fig. 7: ein Detail der Darstellung in Fig. 6 zur Verdeutlichung des Sitzes eines Nockenwellensensors,
- Fig. 8: ein weiteres Detail zur Verdeutlichung der Anordnung eines Nockenwellensensors und eines Zahnriemenüberspringschutzes,
- Fig. 9: ein Detail zur Verdeutlichung einer Labyrinthdichtung im Kurbelwellenbereich,
- Fig. 10 und 11: Details zur Verdeutlichung der Abdichtung der Kapselteile.

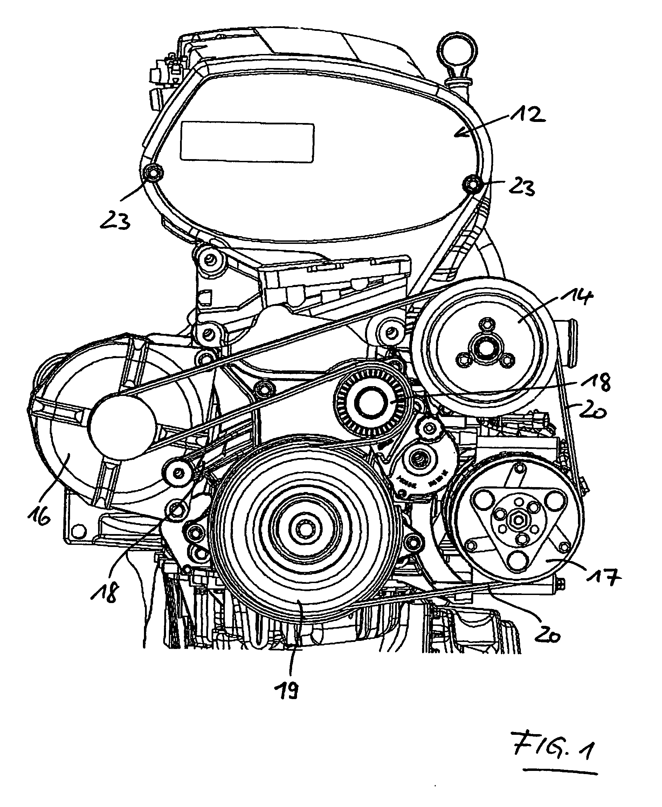

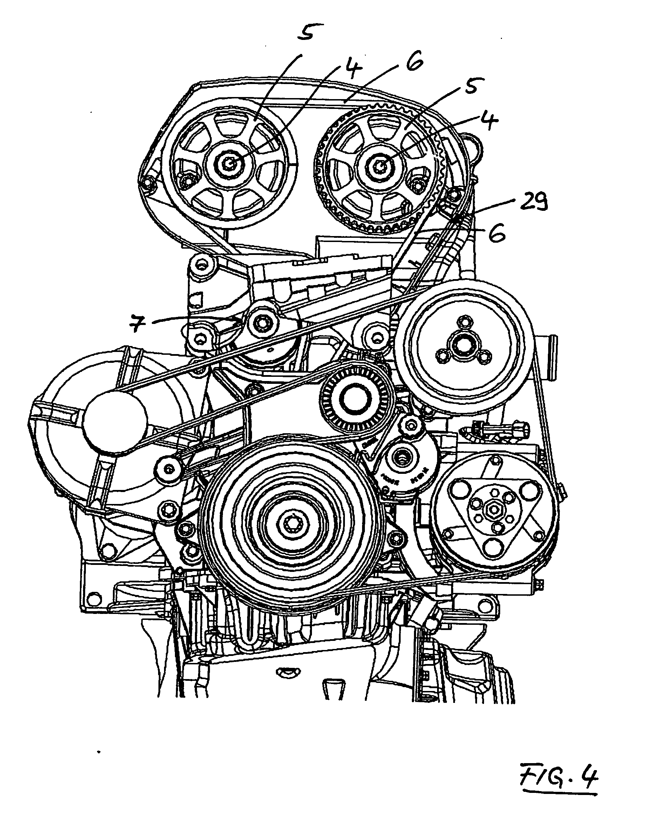

Der grundsätzliche Aufbau der erfindungsgemäßen Brennkraftmaschine ist insbesondere der Darstellung der Figuren 1, 2 und 4 zu entnehmen:

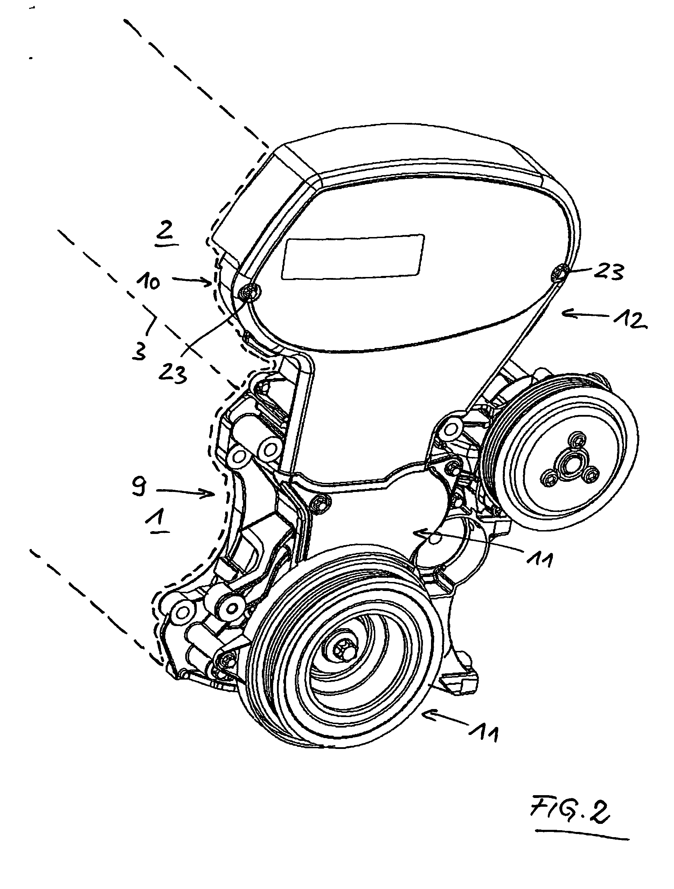

In der Fig. 2 ist mit gestrichelten Linien die seitliche Kontur des Zylinderblockes 1 sowie des Zylinderkopfes 2 veranschaulicht. Deren Trennebene ist mit der Bezugsziffer 3 bezeichnet. Im Zylinderkopf 2 sind zwei Nockenwellen 4 gelagert, die drehfest mit Nockenwellenrädern 5 verbunden sind. Diese umschlingt ein Zahnriemen 6, der um ein Rad geführt ist, das drehfest mit einer Kurbelwelle der Brennkraftmaschine verbunden ist. Mit der Bezugsziffer 7 ist ein Zahnriemenspanner 7, mit der Bezugsziffer 8 eine diesem gegenüberliegende Umlenkrolle für den Zahnriemen 6 bezeichnet.

Die gekapselte Abdeckung des Zahnriemens 6 erfolgt in seinem hinteren Bereich, somit auf der dem Zylinderblock 1 und dem Zylinderkopf 2 zugewandten Seite mittels zweier Kapselteile 9 und 10 sowie auf der den Zylinderblock 1 und dem Zylinderkopf 2 abgewandten Seite des Zahnriemens 6 mittels zweier weiterer Kapselteile 11 und 12. Das untere, hintere Kapselteil 9 und das untere, vordere Kapselteil 11 erstrecken sich im Wesentlichen im Bereich des Zylinderblockes 1, das hintere, obere Kapselteil 10 und das vordere, obere Kapselteil 12 im Wesentlichen im Bereich des Zylinderkopfes 2.

Das untere, hintere Kapselteil 9 weist die Besonderheit auf, dass es die Funktion eines Aggregateträgers besitzt, der in Form eines Zwischenflansches zwischen dem Zylinderblock 1 und dem Zahnriemen 6 an der Stirnseite des Zylinderblocks 1 anliegt und mit diesem befestigt ist.

Von Bedeutung ist bei dem Kapselteil 9 (das durch den Aggregateträger gebildet ist), dass es eine umlaufende, hohe Rippe 13 aufweist. Diese ist im Wesentlichen U-förmig ausgebildet, mit nach unten gerichtetem, die Kurbelwelle umschließenden Bogen, wobei die Rippe 13 in einem zentralen Bereich des Kapselteils 9 positioniert ist. Die Bereiche neben der Rippe 13 sind für die Befestigung bzw. Integrierung der diversen Aggregate vorgesehen. So trägt in das Kapselteil 13 bzw. der Aggregateträger eine Kühlmittelpumpe 14, ein Ölpumpengehäuse 15, einen Generator 16, einen Klimakompressor 17 und einen Riemenspanner 18. Von einem Antriebsrad 19, welches mit der Kurbelwelle der Brennkraftmaschine verbunden ist, werden mit einem Riemen 20 der Generator 16, die Kühlmittelpumpe 14 und der Klimakompressor 17 angetrieben. Der Riemenspanner 18 sorgt in an sich bekannter Weise für eine optimale Riemenspannung. Das Ölpumpengehäuse 15 als Teil des Kapselteiles 9 bzw. des Aggregateträgers erstreckt sich um einen Zapfen der Kurbelwelle, so dass der Läufer der Ölpumpe üblicherweise von der Kurbelwelle angetrieben werden kann.

Die umlaufende hohe Rippe 13 ist nach oben in Richtung des Zylinderkopf 2 hin unterbrochen. Diese Rippe 13 bildet im Bereich des Kapselteiles 9 bzw., des Aggregateträgers die umlaufende Wand eines Zahnriemenkastens, wobei das untere, vordere Kapselteil 11 in seinem mit dem unteren, hinteren Kapselteil 9 verbundenen Zustand an der Rippe 13 anliegt.

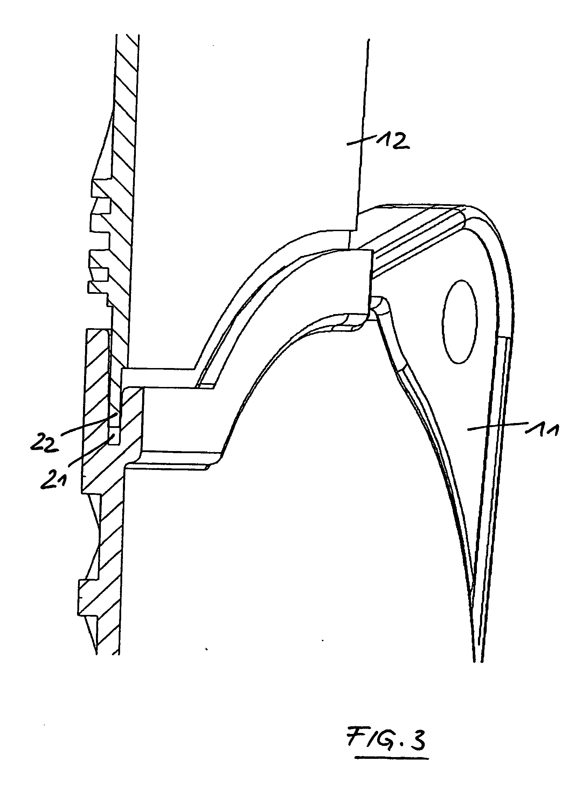

Mit dem Zylinderkopf 2 ist das obere, hintere Kapselteil 10 befestigt, ferner ist das obere, vordere Kapselteil 12 sowohl mit dem unteren, vorderen Kapselteil 11 als auch mit dem oberen, hinteren Kapselteil 10 befestigt. Dies geschieht beispielsweise durch Verschrauben oder mittels einer Clipsverbindung. Zur Abdichtung der Verbindungsbereiche der Kapselteile sind diese vorteilhaft in Art von Nut-Feder-Verbindungen ausgeführt, wie es in Fig. 3 für die Verbindung des unteren, vorderen Kapselteiles 11 und des oberen, vorderen Kapselteils 12 veranschaulicht ist. Das Kapselteil 11 ist mit einer Nut 21 versehen, in die ein unterer, ebener Wandungsabschnitt 22 des oberen Kapselteils 12 von oben einsteckbar ist bzw. das eingesteckte obere Kapselteil 12 nach oben aus dem unteren Kapselteil 11 herausgezogen werden kann. Die Befestigung des Kapselteils 12 am Kapselteil 10 erfolgt mittels zweier Schrauben 23. Beim Lösen dieser Schrauben kann das obere, vordere Kapselteil 12 einfach zwischen dem Motorhalter und dem oberen, hinteren Kapselteil 10 nach oben herausgezogen werden. Das ergibt die Möglichkeit zur Überprüfung der Zahnriemenspannung und Zahnriemenkomponenten, bzw. für Servicearbeiten an Nockenwellen - Radialwellendichtungen, Zylinderkopfhaube, Zahnriemenspanner und dem einem ggf. an dem oberen, hinteren Kapselteil 10 eingeclipsten Kabelbaum. Zum Befestigen des oberen, hinteren Kapselteil 10 ist kein spezielles Montagewerkzeug zur Positionierung am Zylinderkopf (Ausrichtung) erforderlich, womit eine einfache Montage möglich ist. Der Zahnriemen 6 ist bei ausgebautem Motorhalter demontierbar, da er nicht gefangen ist.

Die Ausrichtung des oberen, hinteren Kapselteils 10 am Zylinderkopf 2 erfolgt über eine enge Bohrung 24 und ein Langloch 25 (Dot- und Slot-System). Eine weitere Bohrung 26 dient als Sitz für einen einclipsbaren, integrierten Nockenwellensensor 27, der zusammen mit dem Kapselteil 10 mit dem Zylinderkopf 2 verschraubt wird.

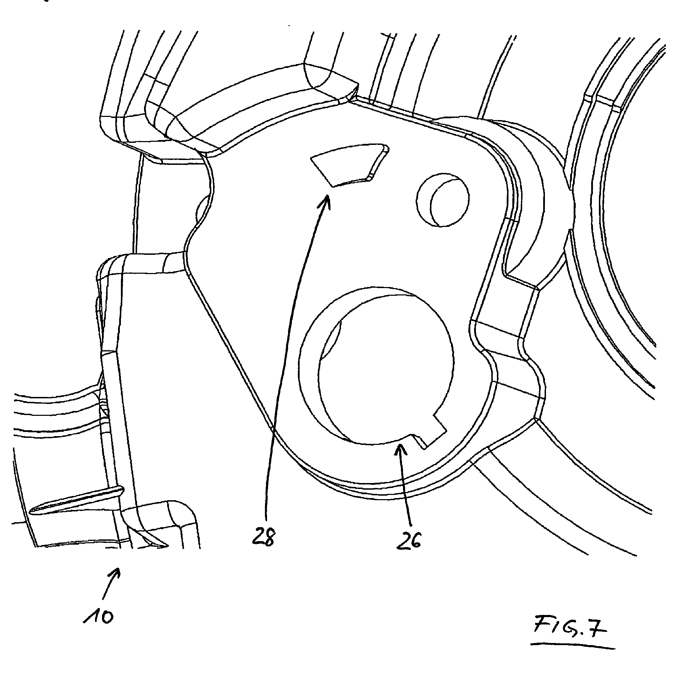

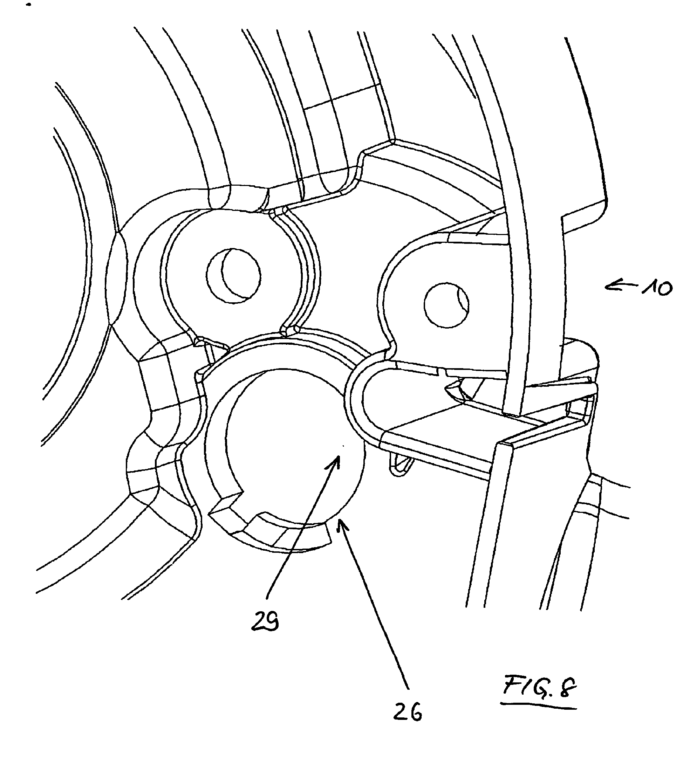

Fig. 7 zeigt eine benachbart der Bohrung 26 für den Nockenwellensensor 27 angeordnete Rastvertiefung in dem Kapselteil 10, die der Vormontage des Nockenwellensensors 27 dient. Dieser ist in der vormontierten Position gesichert. Fig. 8 veranschaulicht eine im Bereich des Nockenwellensensors 27 angeordneten Zahnriemenüberspringschutz 29, der als Fläche ausgebildet ist, die sehr dicht zum Zahnriemen 6 positioniert ist. Aufgrund der Befestigung des Nockenwellensensors 27 sind am Zylinderkopf 2 keine zusätzlichen, bearbeiteten Befestigungsaugen für diesen erforderlich. Der Nockenwellensensor 27 kann an dem Kapselteil 10 ohne Werkzeug vormontiert werden. In dieser Haube, die vorzugsweise aus Kunststoff besteht, ist ein Fixierelement 30 für den Kabelbaum integriert. Es kann sich beispielsweise um elektrische Anschlüsse für den Nockenwellensensor, einen Öldruckschalter und/oder einen Schalter des Klimakompressors handeln.

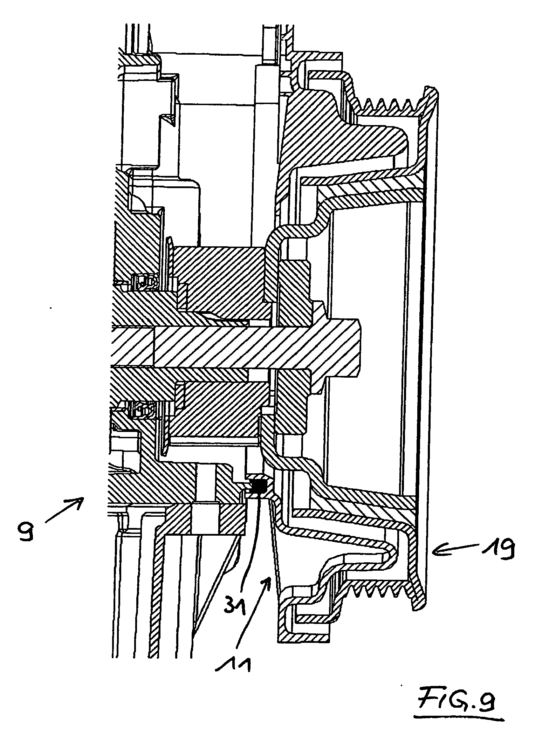

Von besonderer Bedeutung ist die Abdichtung der Kapselteile untereinander. Zur Ausbildung der beschriebenen Nut-Feder-Systeme, wird die jeweilige Nut 21 mit einer Siliconschaumfüllung versehen. Diese gewährleistet insbesondere die Dichtheit zwischen dem unteren, hinteren Kapselteil bzw. Aggregateträger und dem unteren, vorderen Kapselteil 11. Der Kurbelwellenbereich ist zusammen mit dem Antriebsrad 19, das die Funktion eines Drehschwingungsdämpfers in sich vereinigt, als Labyrinthdichtung ausgeführt, wie es in der Fig. 9 veranschaulicht ist. Diese Labyrinthdichtung dient gleichermaßen als Fadeneindringschutz, insbesondere wenn ein Poly V-Riemen Verwendung findet. Insgesamt ergibt sich eine sehr hohe Dichtigkeit der Kapselung aufgrund der drastischen Reduzierung von Öffnungen, dem Einsatz von Silicondichtungen 31 und dem genannten Dichtungslabyrinth im Kurbelwellenbereich. Die Silicondichtungen 31 sind insbesondere in den Bereichen der Nockenwellenränder und des Aggregateträgers aufgespritzt.

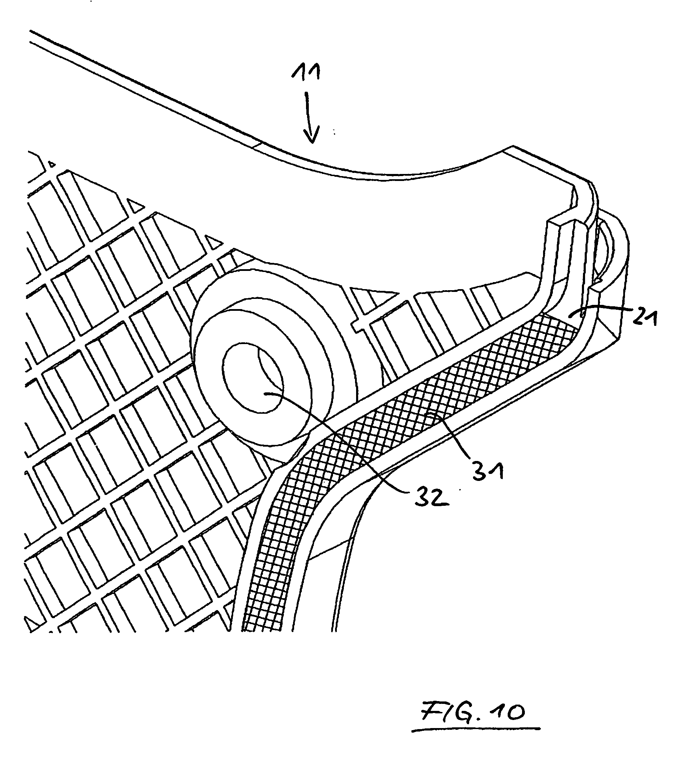

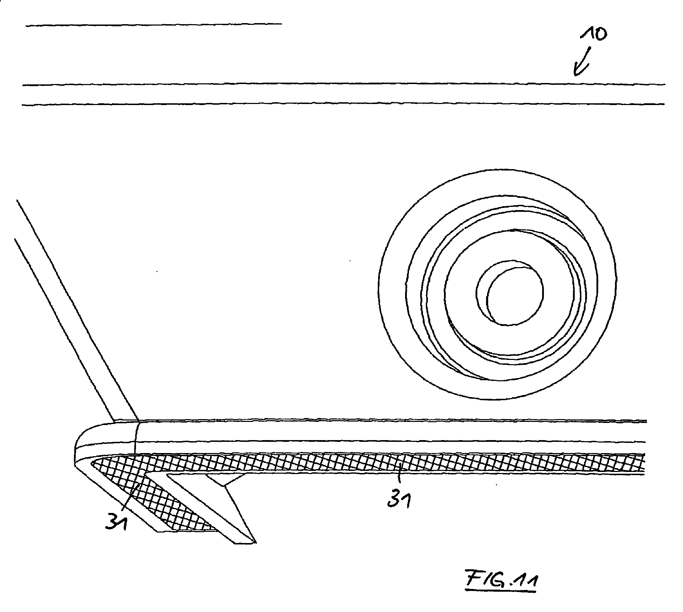

Fig. 10 zeigt einen Dichtbereich des unteren, vorderen Kapselteils 11, von hinten bzw. innen gesehen. Im Bereich der von der einen Schraube 23 durchsetzten Bohrung 32 ist die Nut 21 mit der Silicondichtung 31 ausgefüllt. Fig. 11 veranschaulicht gleichfalls die Silicondichtung zum Aggregateteil, allerdings für das obere, hintere Kapselteil 10.

### Bezugszeichenliste

- Zylinderblock: 1
- Zylinderkopf: 2
- Trennebene: 3
- Nockenwelle: 4
- Nockenwellenrad: 5
- Zahnriemen: 6
- Zahnriemenspanner: 7
- Umlenkrolle: 8
- Unteres, hinteres Kapselteil: 9
- Oberes, hinteres Kapselteil: 10
- Unteres, vorderes Kapselteil: 11
- Oberes, vorderes Kapselteil: 12
- Hohe Rippe: 13
- Kühlmittelpumpe: 14
- Ölpumpengehäuse: 15
- Generator: 16
- Klimakompressor: 17
- Riemenspanner: 18
- Antriebsrad: 19
- Riemen: 20
- Nut: 21
- Wandungsabschnitt: 22
- Schraube: 23
- Bohrung: 24
- Langloch: 25
- Bohrung: 26
- Nockenwellensensor: 27
- Rastvertiefung: 28
- Zahnriemenüberspringschutz: 29
- Fixierelement: 30
- Siliconschaumdichtung: 31
- Bohrung: 32
- Motorhalter: 33

## Patentansprüche

1. Brennkraftmaschine mit einem Übertragungsmittel (6) zum Übertragen der Bewegung einer in einem Zylinderblock (1) gelagerten Kurbelwelle auf mindestens eine in einem Zylinderkopf (2) gelagerten Nockenwelle (4), sowie mit einer Abdeckung (9, 10, 11, 12) für das Übertragungsmittel (6), die in Art einer Kapsel das Übertragungsmittel (6) umschließt, mit einem hinteren, zwischen dem Übertragungsmittel (6) und dem Zylinderblock (1) sowie dem Zylinderkopf (2) angeordneten Kapselabschnitt (9, 10) und einem vorderen, auf der dem Zylinderblock (1) sowie Zylinderkopf (2) abgewandten Seite des Übertragungsmittels (6) angeordneten Kapselabschnitt (11, 12), **dadurch gekennzeichnet, dass** das Übertragungsmittel ein Zahnriemen (6) ist und der hintere (9, 10) und der vordere Kapselabschnitt (11, 12) der Abdeckung im Bereich der Trennebene (3) von Zylinderblock (1) und Zylinderkopf (2) geteilt ausgebildet sind.

2. Maschine nach Anspruch 1, **dadurch gekennzeichnet, dass** das hintere, dem Zylinderblock (1) benachbarte (untere) Kapselteil (9) durch einen Aggregateträger gebildet ist, der in Form eines Zwischenflansches zwischen dem Zylinderblock (1) und dem Zahnriemen (6) an der Stirnseite des Zylinderblockes (1) anliegt.

3. Maschine nach Anspruch 2, **dadurch gekennzeichnet, dass** das hintere, untere Kapselteil (9) zumindest ein Kühlmittelpumpengehäuse sowie ein Ölpumpengehäuse umfasst und den Ölraum sowie den Kühlmittelraum des Zylinderblocks (1) stirnseitig abschließt.

4. Maschine nach Anspruch 2 oder 3, **dadurch gekennzeichnet, dass** Bestandteil des hinteren unteren Kapselteils (9) eine umlaufende, hohe Rippe (13) bildet.

5. Maschine nach einem der Ansprüche 1 bis 4, **dadurch gekennzeichnet, dass** das obere, hintere Kapselteil (10) im Wesentlichen flach und das obere, vordere Kapselteil (12) im Wesentlichen haubenförmig ausgebildet ist.

6. Maschine nach einem der Ansprüche 1 bis 5, **dadurch gekennzeichnet, dass** das obere, vordere Kapselteil (12) von oben in das untere, vordere Kapselteil (11) einsetzbar ist.

7. Maschine nach einem der Ansprüche 1 bis 6, **dadurch gekennzeichnet, dass** die Kapselteile (9 bis 12) in Art einer Nut-Feder-Verbindung (21, 22) steckbar sind, insbesondere das untere, vordere Kapselteil (11) und das obere, vordere Kapselteil (12) in Art der Nut-Feder-Verbindung (21, 22) steckbar sind.

8. Maschine nach einem der Ansprüche 1 bis 7, **dadurch gekennzeichnet, dass** Mittel (24, 25) zum Ausrichten und/oder Fixieren des oberen, hinteren Kapselteils (10) am Zylinderkopf (2) vorgesehen sind.

9. Maschine nach einem der Ansprüche 1 bis 8, **dadurch gekennzeichnet, dass** das obere, hintere Kapselteil (10) der Aufnahme eines Halteelementes (30) für einen Kabelkanal oder dergleichen und/oder eines Nockenwellensensors (27) und/oder eines Zahnriemenüberspringschutzes (29) dient.

10. Maschine nach einem der Ansprüche 1 bis 9, **dadurch gekennzeichnet, dass** Dichtmittel (31) zum Abdichten der Kontaktflächen der Kapselteile (9 bis 12) vorgesehen sind, insbesondere Dichtmittel zum Abdichten der vorderen und hinteren, unteren Kapselteile (11, 9) sowie zum Abdichten der oberen und unteren Kapselteile (9, 10; 11, 12) .

11. Maschine nach Anspruch 10, **dadurch gekennzeichnet, dass** die Dichtmittel (31) Siliconschaumdichtungen sind.

12. Maschine nach einem der Ansprüche 1 bis 11, **dadurch gekennzeichnet, dass** die Kurbelwelle mit einem Drehschwingungsdämpfer (19) versehen ist, wobei das untere, vordere Kapselteil (11) im Bereich des Drehschwingungsdämpfers Labyrinthform aufweist.

## Claims

1. Internal combustion engine with a transmission means (6) for transmitting the movement of a crankshaft disposed in a cylinder block (1) to at least one camshaft (4) disposed in a cylinder head (2), and also with a cover (9, 10, 11, 12) for the transmission means (6), which encloses the transmission means (6) in the manner of a capsule, with a rear capsule section (9,10) arranged between the transmission means (6) and the cylinder block (1) and also the cylinder head (2) and a front capsule section (11,12) arranged on the side of the transmission means (6) remote from the cylinder block (1) and also the cylinder head (2), **characterised in that** the transmission means is a toothed belt (6) and the rear (9,10) and the front capsule section (11,12) of the cover are divided in the region of the separating plane (3) of the cylinder block (1) and cylinder head (2).

2. Engine according to claim 1, **characterised in that** the rear (lower) capsule part (9) adjacent to the cylinder block (1) is formed by a unit support, which abuts against the face of the cylinder block (1) in the form of an intermediate flange between the cylinder block (1) and the toothed belt (6).

3. Engine according to claim 2, **characterised in that** the rear lower capsule part (9) comprises at least a coolant pump casing as well as an oil pump casing and closes off the oil chamber and also the coolant chamber of the cylinder block (1) on the face side.

4. Engine according to claim 2 or 3, **characterised in that** a? component of the rear lower capsule part (9) forms a peripheral high rib (13).

5. Engine according to one of claims 1 to 4, **characterised in that** the upper rear capsule part (10) is substantially flat and the upper front capsule part (12) is substantially dome-shaped.

6. Engine according to one of claims 1 to 5, **characterised in that** the upper front capsule part (12) can be inserted into the lower front capsule part (11) from above.

7. Engine according to one of claims 1 to 6, **characterised in that** the capsule parts (9 to 12) can be plugged in place in the manner of a tongue and groove joint (21, 22), in particular the lower front capsule part (11) and the upper front capsule part (12) can be plugged in place in the manner of the tongue and groove joint (21, 22).

8. Engine according to one of claims 1 to 7, **characterised in that** there are provided means (24, 25) for aligning and/or securing the upper rear capsule part (10) to the cylinder head (2).

9. Engine according to one of claims 1 to 8, **characterised in that** the upper rear capsule part (10) serves to receive a holding element (30) for a cable duct or the like and/or a camshaft sensor (27) and/or a toothed belt jumping protection arrangement (29).

10. Engine according to one of claims 1 to 9, **characterised in that** there are provided sealing means (31) for sealing the contact faces of the capsule parts (9 to 12), in particular sealing means for sealing the front and rear lower capsule parts (11, 9) and also for sealing the upper and lower capsule parts (9, 10; 11, 12).

11. Engine according to claim 10, **characterised in that** the sealing means (31) are silicone foam gaskets.

12. Engine according to claims 1 to 11, **characterised in that** the crankshaft is provided with a torsional vibration damper (19), wherein the lower front capsule part (11) has a labyrinth form in the region of the torsional vibration damper.

## Revendications

1. Moteur à combustion interne comprenant un moyen de transmission (6) destiné à transmettre le déplacement d'un vilebrequin logé dans un bloc-cylindres (1) à au moins un arbre à cames (4) logé dans une culasse (4), ainsi qu'un couvercle (9, 10, 11, 12) pour le moyen de transmission (6), qui entoure à la façon d'un capotage le moyen de transmission (6), comprenant une partie de capotage arrière (9, 10) disposée entre le moyen de transmission (6) et le bloc-cylindres (1) ainsi que la culasse (2) et une partie de capotage avant (11, 12) disposée du côté du moyen de transmission (6) opposé au bloc-cylindres (1) ainsi qu'à la culasse (2), **caractérisé en ce que** le moyen de transmission est une courroie dentée (6) et la partie de capotage arrière (9, 10) et la partie de capotage avant (11, 12) du couvercle sont conçues de manière à être divisées dans la zone du plan de séparation (3) du bloc-cylindres (1) et de la culasse (2).

2. Moteur selon la revendication 1, **caractérisé en ce que** la partie de capotage arrière (inférieure) voisine du bloc-cylindres (1) est formée par un support de bloc-moteur, qui, sous forme d'une bride intermédiaire entre le bloc-cylindres (1) et la courroie dentée (6), est disposé sur la face frontale du bloc-cylindres (1).

3. Moteur selon la revendication 2, **caractérisé en ce que** la partie de capotage inférieure arrière (9) comporte au moins un carter de pompe de fluide de refroidissement ainsi qu'un carter de pompe à huile et isole frontalement le carter d'huile ainsi que la chambre de fluide réfrigérant du bloc-cylindres (1).

4. Moteur selon la revendication 2 ou 3, **caractérisé en ce qu'**une partie constituante de la partie (9) de capotage inférieure arrière forme une nervure entourante haute (13).

5. Moteur selon l'une des revendications 1 à 4, **caractérisé en ce que** la partie (10) de capotage supérieure arrière est conçue de manière sensiblement plate et la partie (12) de capotage supérieure avant est conçue sensiblement en forme de dôme.

6. Moteur selon l'une des revendications 1 à 5, **caractérisé en ce que** la partie (12) de capotage supérieure avant est insérable depuis le dessus dans la partie (11) de capotage inférieure avant.

7. Moteur selon l'une des revendications 1 à 6, **caractérisé en ce que** les parties de capotage (9 à 12) sont enfichables à la façon d'une liaison (21, 22) à languettes et rainures, et en particulier la partie (11) de capotage inférieure avant et la partie (12) de capotage supérieure sont enfichables à la façon d'une liaison (21, 22) à languettes et rainures.

8. Moteur selon l'une des revendications 1 à 7, **caractérisé en ce que** des moyens (24, 25) destinés à orienter et/ou fixer la partie (10) de capotage supérieure arrière sont prévus sur la culasse (2).

9. Moteur selon l'une des revendications 1 à 8, **caractérisé en ce que** la partie (10) de capotage supérieure arrière sert à loger un élément de retenue (30) pour un canal de câbles ou similaire et/ou un capteur (27) d'arbre à cames et/ou une protection (29) contre l'échappement de la courroie dentée.

10. Moteur selon l'une des revendications 1 à 9, **caractérisé en ce que** des moyens d'étanchéité (31) sont prévus pour l'étanchéité des surfaces de contact des parties de capotage (9 à 12), en particulier des moyens d'étanchéité pour l'étanchéité des parties de capotage inférieures avant et arrière (11, 9) ainsi que pour l'étanchéité des parties (9, 10 ; 11, 12)de capotage supérieure et inférieure.

11. Moteur selon la revendication 10, **caractérisé en ce que** les moyens d'étanchéité (31) sont des joints en mousse de silicone.

12. Moteur selon l'une des revendications 1 à 11, **caractérisé en ce que** le vilebrequin est pourvu d'un amortisseur de torsion (19), la partie de capotage inférieure avant (11) présentant dans la zone de l'amortisseur de torsion une forme de labyrinthe.
